# EUROPEAN PATENT APPLICATION

(11) **EP 1 147 939 A2**
(43) Date of publication of application: **24.10.2001**
(21) Application number: 01109521.3
(22) Date of filing: 17.04.2001
(51) Int. Cl.: B60N 3/06, B60N 2/62

(54) **Motor-driven footrest device of seat**

(30) Priority: 17.04.2000 JP 2000115016; 17.04.2000 JP 2000115019; 17.04.2000 JP 2000115020; 17.04.2000 JP 2000115021
(71) Applicant: Johnson Controls Automotive Systems Corporation, Ayase-shi, Kanagawa 252-1121 (JP)
(72) Inventor: Kogure, Masaaki, Johnson Controls Auto. Sys. Corp., Ayase-shi, Kanagawa 252-1121 (JP)
(74) Representative: Grünecker, Kinkeldey, Stockmair & Schwanhäusser Anwaltssozietät

(57) **Abstract**

A motor-driven footrest device of a seat, comprises a footrest; an expanding mechanism having one end equipped with the footrest, the expanding mechanism being movable to assume a shrunk condition wherein the footrest is received in an opening formed in a seat cushion of the seat and an expanded condition wherein the footrest is projected from the opening to permit the feet of a seat occupant to be put thereon; an electric drive unit connected to the other end of the expanding mechanism to move the same to assume the shrunk condition and the expanded condition by the force of an electric power; and a mounting structure secured to a base structure of the seat, the mounting structure carrying both of the expanding mechanism and the electric drive unit.

## Description

### BACKGROUND OF THE INVENTION

### 1. Field of the Invention

The present invention relates in general to automotive seats and more particularly to automotive seats of a type which is equipped with a footrest device for putting thereon the feet of a seat occupant. More specifically, the present invention is concerned with a motor-driven footrest device for an automotive seat, which has an Ottoman (viz., footrest) movable between an operative (or projected) position and an inoperative (or stowed) position by an electric power.

### 2. Description of the Prior Art

In order to clarify the task of the present invention, description on a conventional motor-driven footrest device will be briefly commenced with respect to a device that is shown in Japanese Patent First Provisional Publication 9-206157. The device of the publication generally comprises an electric drive unit, a slider unit having a sliding rail driven by the electric drive unit, a link unit actuated by the slider rail and an Ottoman (viz., footrest) driven by the link unit to move between an operative (viz., projected) position and an inoperative (viz., stowed) position. However, due to its complicated construction, the known footrest device of the publication has failed to provide makers and users with a satisfaction. As is known, the complicated construction tends to induce not only a bulky and heavier structure but also a time-consumed assembling work and thus bring about costly products of the footrest device.

### SUMMARY OF THE INVENTION

It is therefore an object of the present invention to provide a motor-driven footrest device of a seat, which is simple and compact in construction, light in weight and can be produced readily and economically.

It is another object of the present invention to provide a motor-driven footrest device of a seat, which can be constructed into a module.

It is another object of the present invention to provide a motor-driven footrest device of a seat, which can provide an adequate space in front of the seat even when the Ottoman is in the operative (viz., projected) position.

It is still another object of the present invention to provide a motor-driven footrest device of a seat, which is smoothly operated without generating undesired noises.

It is a further object of the present invention to provide a motor-driven footrest device of an automotive seat, which, upon receiving an abnormally big force due to a vehicle collision or the like by the Ottoman assuming the operative position, can effectively and safely absorb such abnormal force thereby to protect the seat occupant, particular the feet of the seat occupant.

It is a still further object of the present invention to provide a motor-driven footrest device of an automotive seat, which is readily assembled.

According to a first aspect of the present invention, there is provided a motor-driven footrest device of a seat, which comprises a footrest; an expanding mechanism having one end equipped with the footrest, the expanding mechanism being movable to assume a shrunk condition wherein the footrest is received in an opening formed in a seat cushion of the seat and an expanded condition wherein the footrest is projected from the opening to permit a seat occupant's feet to put thereon; an electric drive unit connected to the other end of the expanding mechanism to move the same to assume the shrunk condition and the expanded condition by the force of an electric power; and a mounting structure secured to a base structure of the seat, the mounting structure carrying both of the expanding mechanism and the electric drive unit.

According to a second aspect of the present invention, there is provided with a motor-driven footrest device for use with a sliding seat, which comprises a footrest; an expanding mechanism having one end equipped with the footrest, the expanding mechanism being movable to assume a shrunk condition where the footrest is received in an opening formed in a seat cushion of the seat and an expanded condition wherein the footrest is projected from the opening to permit the feet of a seat occupant to be put thereon; an electric drive unit connected to the other end of the expanding mechanism to move the same to assume the shrunk condition and the expanded condition by the force of an electric power; a seat slide mechanism for sliding the seat, the seat slide mechanism including two fixed rails secured to a fixed structure, and two slide rails slidably engaged with the fixed rails and mounting thereon the seat; and a mounting structure secured to the two slide rails to move therewith, the mounting structure carrying both of the expanding mechanism and the electric drive unit.

### BRIEF DESCRIPTION OF THE DRAWINGS

Other objects and advantages of the present invention will become apparent from the following description when taken in conjunction with the accompanying drawings, in which:
Fig. 1 is a perspective view of an automotive seat to which a motor-driven footrest device of the present invention is practically applied;
Fig. 2 is a side view of the automotive seat taken from the direction of the arrow "II" of Fig. 1, with the Ottoman (viz., footrest) assuming an inoperative (or stowed) position;
Fig. 3 is an exploded view of a seat cushion of the automotive seat, a seat slide device for the automotive seat and the motor-driven footrest device of the invention incorporated with the seat slide device;
Fig. 4 is a perspective view of a unit which includes the seat slide device and the motor-driven footrest device of the present invention, showing a condition wherein the Ottoman assumes its inoperative (or stowed) position;
Fig. 5 is a view similar to Fig. 4, but showing a condition wherein the Ottoman assumes its operative (or projected) position;
Fig. 6 is an exploded view of a first link mechanism which constitutes part of the motor-driven footrest device of the present invention;
Fig. 7 is a sectional view of the motor-driven footrest device of the present invention, showing a condition wherein the Ottoman assumes its inoperative (or stowed) position;
Fig. 8 is a view similar to Fig. 7, but showing a condition wherein the Ottoman assumes its operative (or projected) position;
Fig. 9 is a perspective view of a longer link member which is a part of second link mechanism of the motor-driven footrest device of the present invention;
Fig. 10 is a modification of the longer link member of Fig. 9;
Fig. 11 is an exploded view of plastic sliders which are parts of the Ottoman;
Fig. 12 is a sectional view of one of the plastic sliders in an assembled condition;
Figs. 13A, 13B and 13C are views showing steps for assembling each plastic slider to a sliding frame which is a part of the Ottoman proper;
Fig. 14 is an exploded view of parts which constitute an essential portion of the Ottoman proper;
Fig. 15 is a sectional view of the parts of the Ottoman in an assembled condition; and
Figs. 16A to 16D are views showing the steps for assembling the Ottoman proper.

### DETAILED DESCRIPTION OF THE INVENTION

In the following, a motor-driven footrest device 4 according to the present invention will be described in detail with reference to the accompanying drawings.

For ease of understanding, various directional terms, such as, upper, lower, upward, downward, right, left and the like are used in the description. However, such terms are to be understood with respect to only a drawing or drawings on which the corresponding part is shown.

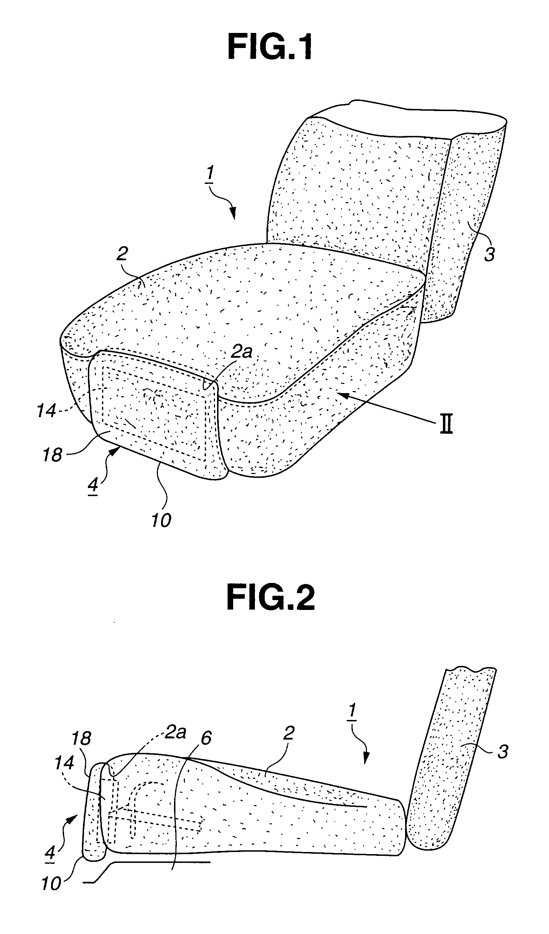

Referring to Figs. 1 and 2, there is shown an automotive seat 1 (particularly, front passenger's seat) to which the motor-driven footrest device 4 according to the present invention is practically applied.

The seat 1 comprises a seat cushion 2 and a seat back 3 which is pivotally connected to a rear end of the seat cushion 2 through a reclining mechanism (not shown). As is seen from Fig. 1, the seat cushion 2 is formed at its front end portion with a rectangular opening 2a. As will become apparent as the description proceeds, the rectangular opening 2a receives therein an Ottoman 10 (viz., footrest) of the motor-driven footrest device 4 of the present invention.

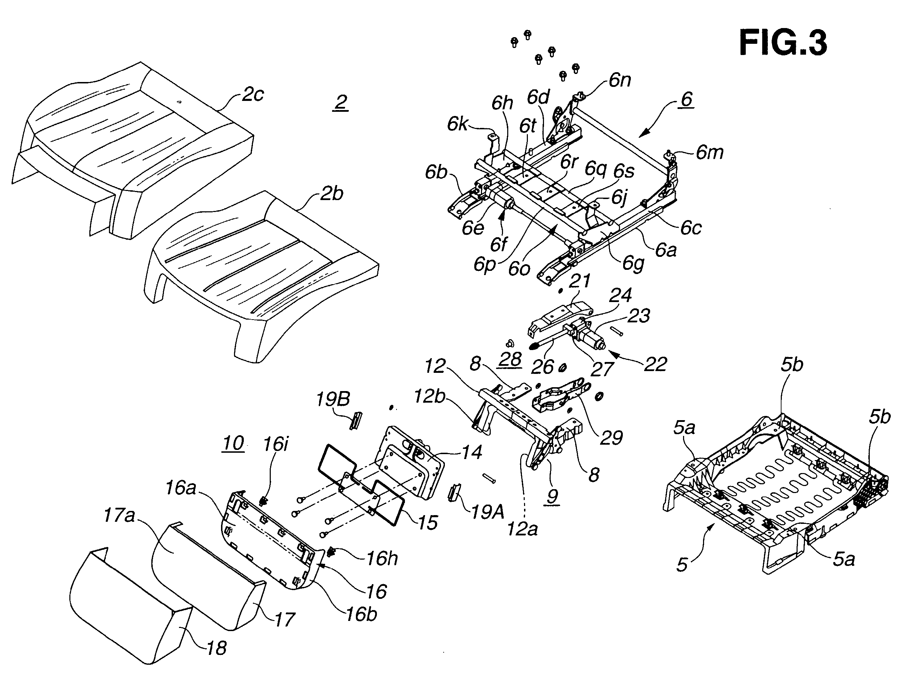

As is seen from Fig. 3, the seat cushion 2 generally comprises a cushion frame 5, a pad member 2b mounted on the cushion frame 5 and a skin member 2c covering the pad member 2b. The cushion frame 5 has two front connecting portions 5a and two rear connecting portions 5b, as shown.

Denoted by numeral 6 is a power seat slide mechanism on which the seat cushion 2 is mounted.

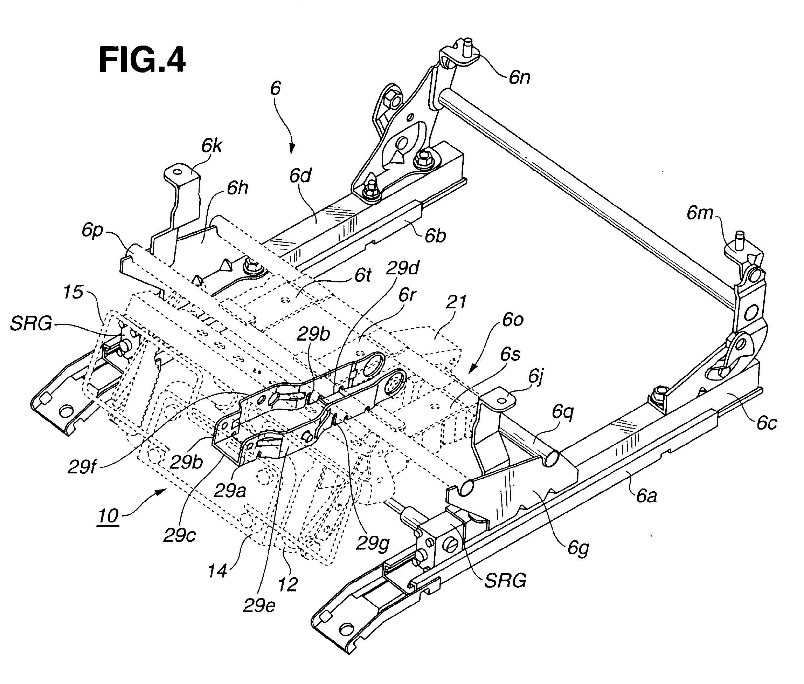

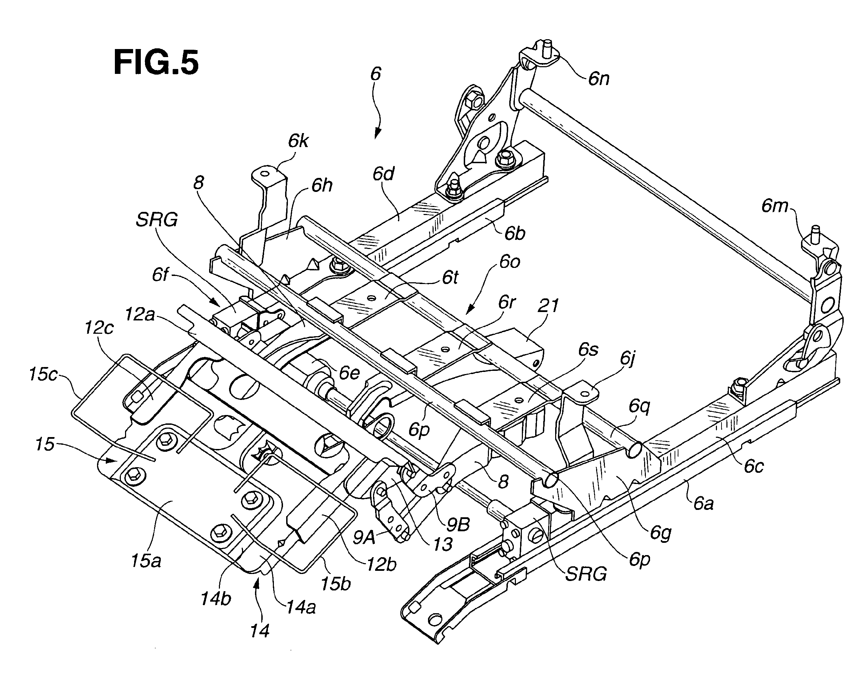

As is best shown in Figs. 4 and 5, the power seat slide mechanism comprises two fixed rails 6a and 6b which are fixed to a floor of an associated motor vehicle, two slide rails 6c and 6d which are slidably engaged with the two fixed rails 6a and 6b and a drive mechanism 6f (see Fig. 5) which drives or moves the slide rails 6c and 6d relative to the fixed rails 6a and 6b by the force of an electric power. Although not shown in the drawing, each slide rail 6c or 6d carries a threaded drive rod which has a screw thread formed therearound. The threaded drive rod is operatively engaged with a nut member (not shown) fixed to the fixed rail 6a or 6b, so that upon rotation of the threaded drive rod about its axis, the slide rail 6c or 6d slides on and along the fixed rail 6a or 6b forward or rearward.

As is seen from Fig. 5, the drive mechanism 6f comprises an electric motor 6e which has output shafts. Each output shaft is connected through a speed reduction gear SRG to the corresponding drive rod in a manner to rotate the same. Thus, upon energization of the motor 6e, the slide rails 6c and 6d are. moved on and along the fixed rails 6a and 6b forward or rearward.

As is seen from Fig. 5, the slide rails 6c and 6d have at their front portions base brackets 6g and 6h secured thereto. Two front cushion supporting brackets 6j and 6k are secured to the base brackets 6g and 6h respectively. The slide rails 6c and 6d have at their rear portions two rear cushion supporting brackets 6m and 6n secured thereto.

In assembly, the above-mentioned two front connecting portions 5a (see Fig. 3) of the cushion frame 5 of the seat cushion 2 are mounted on and bolted to the front cushion supporting brackets 6j and 6k, and the two rear connecting portions 5b of the cushion frame 5 are mounted on and bolted to the rear cushion supporting brackets 6m and 6n. With this, the seat cushion 2 (more specifically, the seat 1) and the slide rails 6c and 6d constitute a single unit which is movable relative to the fixed rails 6a and 6b. That is, when the electric motor 6e is energized to rotate the output shafts in one direction, the seat 1 is moved forward or rearward relative to the fixed rails 6a and 6b.

Referring back to Fig. 5, between the two base brackets 6g and 6h on the slide rails 6c and 6d, there extends a mounting structure 60 which serves as a structural base of the motor-driven footrest device 4 of the present invention.

The mounting structure 6o comprises two metal pipes 6p and 6q each extending between the base brackets 6g and 6h, and three, that is, first, second and third brackets 6s, 6r and 6t each extending between the two metal pipes 6p and 6q. It is to be noted that these elements are welded to the corresponding portions.

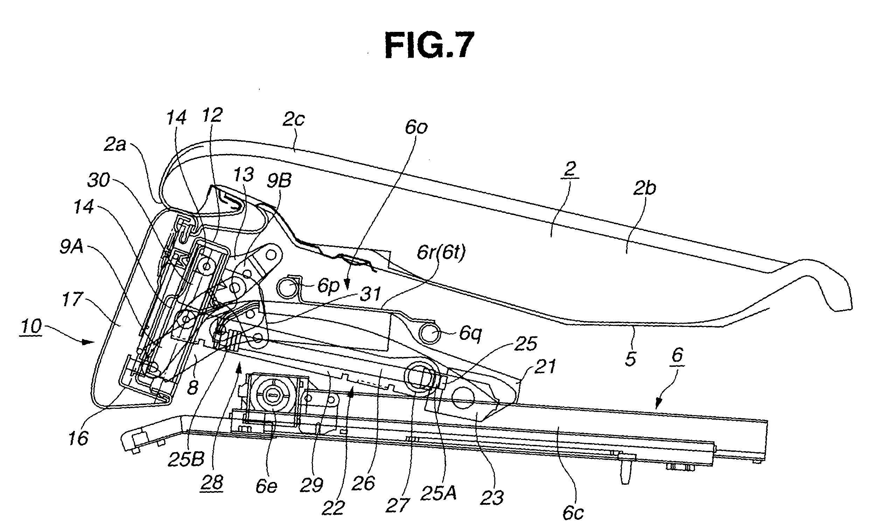

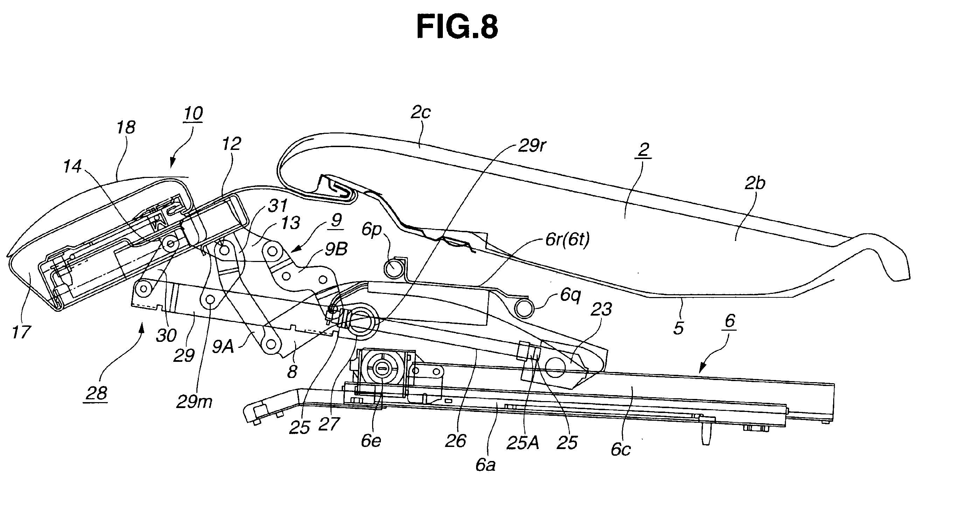

As is seen from Figs. 3 and 5, the motor-driven footrest device 4 comprises two holding arms 8 which are secured to lower surfaces of the first and third brackets 6s and 6t of the mounting structure 6o. As is seen from Fig. 3, the Ottoman 10 is connected to the holding arms 8 through a first link mechanism 9 in such a manner that the Ottoman 10 is movable between an operative (viz., projected) position as shown in Fig. 8 and an inoperative (viz., stowed) position as shown in Fig. 7.

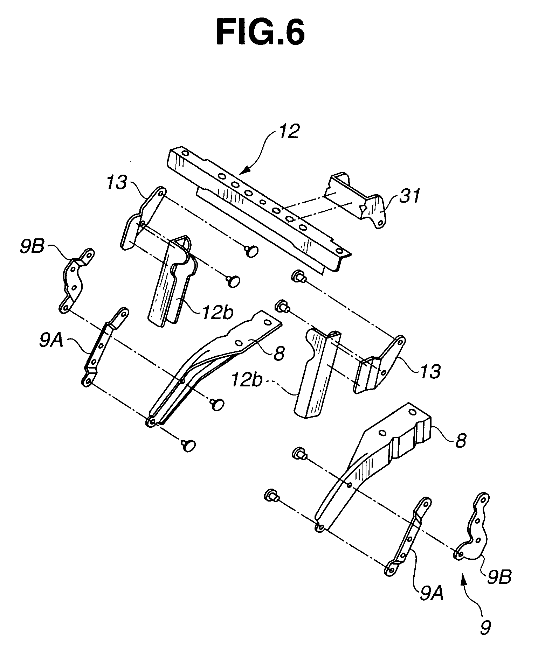

As is seen from Figs. 6 and 8, the first link mechanism 9 comprises two front links 9A which are pivotally connected to the holding arms 8 and two rear links 9B which are pivotally connected to the holding arms 8. Leading ends of these front and rear links 9A and 9B are bent inward, as shown in Fig. 6.

As is seen from Figs. 6 and 8, the leading ends of the front and rear links 9A and 9B are pivotally connected to respective supporting arms 13 which are respectively secured to side portions of a reversed U-shaped supporting frame 12. As shown in Fig. 6, a supporting bracket 31 is secured to an upper bridge portion of the supporting frame 12 for the reason which will become apparent hereinafter.

As is best shown in Figs. 5 and 8, the leading ends of the front and rear links 9A and 9B of each unit are pivotally connected to different portions of the corresponding supporting arm 13.

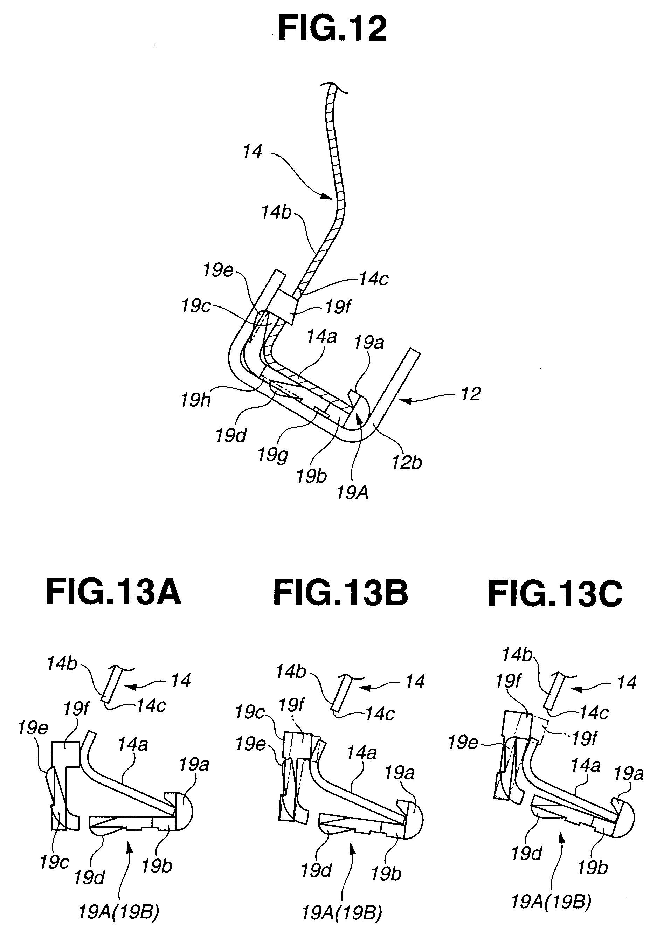

The reversed U-shaped supporting frame 12 constitutes a base structure of the Ottoman 10. That is, as is seen from Fig. 3, the side portions of the supporting frame 12 are formed with respective guide grooves 12b (see Figs. 3 and 12) in which a rectangular sliding frame 14 is slidably received. To the sliding frame 14, there are mounted a spring wire frame 15, a base frame 16, a pad member 17 and a trim member 18 to constitute the entirety of the Ottoman 10. The detailed construction of the Ottoman 10 will be described hereinafter.

As is seen from Fig. 8, the distance between the pivoted portions of the front and rear links 9A and 9B of each unit to corresponding holding arm 8 is set larger than the distance between the pivoted portions of the front and rear links 9A and 9B to the corresponding supporting arm 13.

With this, as is seen from Fig. 7, when the Ottoman 10 is in the inoperative (viz., stowed) position, that is, when the Ottoman 10 is neatly put in the rectangular opening 2a of the seat cushion 2, the front and rear links 9A and 9B of each unit come close to each other showing an inclination of about 30 degrees relative to a horizontal plane. For achieving this inclination of the front and rear links 9A and 9B, the distance between the pivoted portion of the front link 9A to the holding arm 8 and the pivoted portion of the rear link 9B to the holding arm 8 is determined larger than the distance between the pivoted portion of the front link 9A to the supporting arm 13 and the pivoted portion of the rear link 9B to the supporting arm 13. Under the stowed condition of the Ottoman 10, a first imaginary line passing through the pivoted portions of the front and rear links 9A and 9B to the corresponding holding arm 8 and a second imaginary line passing through the pivoted portions of the front and rear links 9A and 9B to the corresponding supporting arm 13 cross each other at an acute angle. With this arrangement, when assuming the inoperative (viz., stowed) position, the Ottoman 10 inclines by about 70 degrees relative to the horizontal plane as shown.

When now the Ottoman 10 is moved forward (viz., leftward in Fig. 7) from the inoperative stowed position, the front and rear links 9A and 9B are forced to pivot in a counterclockwise direction increasing the distance therebetween. During this, as is seen from Fig. 8, the Ottoman 10 is gradually pivoted upward and finally, pivoted to the operative (viz., projected) position as shown. In this operative position, each of the front and rear links 9A and 9B stands generally perpendicular to the corresponding holding arm 8 causing the Ottoman 10 to be in parallel with the holding arm 8, as shown.

As is seen from Fig. 3, for moving the Ottoman 10 in the above-mentioned manner, there is further provided a drive mechanism 22. The drive mechanism 22 is installed in an elongate case 21 which is secured to a lower surface of the above-mentioned second bracket 6r of the mounting structure 6o. The elongate case 21 has a reversed U-shaped cross section and is arranged to cover the later-mentioned threaded drive shaft 26.

As is seen from Figs. 3 and 8, the drive mechanism 22 comprises a motor unit which includes an electric motor 23, a speed reduction gear 24 having an input member engaged with an output member of the motor 23, an output shaft 25 extending from the speed reduction gear 24 and a threaded drive bolt 26 coaxially connected to the output shaft 25. If desired, the threaded drive bolt 26 may be of a double spiral type. The motor unit is pivotally held at the speed reduction gear 24 by the elongate case 21, and the leading end of the threaded drive bolt 26 is rotatably supported by a front end of the elongate case 21. A nut member 27 is operatively engaged with the threaded drive bolt 26.

As is shown in Fig. 8, the threaded drive bolt 26 has front and rear stoppers 25B and 25A mounted thereon by which the axial movement of the nut member 27 relative to the bolt 26 is restricted.

As is seen from Figs. 3 and 8, to the nut member 27, there is connected a second link mechanism 28 for actuating the Ottoman 10.

The second link mechanism 28 comprises a longer link member 29 which, as is seen from Fig. 8, has a rear or right end vertically pivotally connected to the nut member 27.

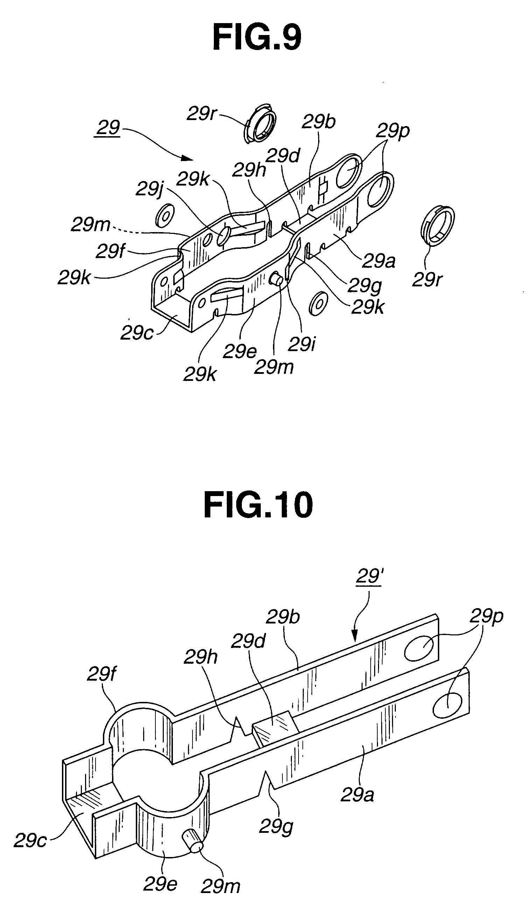

As is seen from Fig. 9, the longer link member 29 generally comprises two parallel side walls 29a and 29b and front and rear connecting walls 29c and 29d each extending between the side walls 29a and 29b. The parallel side walls 29a and 29b have at rear or right ends thereof circular openings 29p respectively and at front or left portions thereof outwardly swelled portions 29e and 29f respectively. Each swelled front portion 29e or 29f is provided with an outwardly projected pin 29m for the reasons which will be described hereinafter. With provision of the swelled front portions 29e and 29f, each side wall 29a or 29b has at front and rear portions of the swelled front portion 29e or 29f front and rear inclined walls (no numerals). Each of these front and rear inclined walls is formed with a reinforcing ridge (or bead) 29k for reinforcing such inclined walls. As shown, each side wall 29a or 29b has near the rear inclined wall an elongate cut 29g or 29h, and near the front inclined wall an opening 29i or 29j. These cuts 29g and 29h and the openings 29i and 29j are used for providing the longer link member 29 with a suitable flexibility, that is, suitable shock absorbing ability. That is, when an abnormally big force is applied to the longer link member 29 from a front (or left) direction, the swelled front portions 29e and 29f are forced to expand outward reducing the length of the longer link member 29. Because of provision of the reinforcing ridges 29k, deformation of the longer link member 29 caused by such big force takes place at just portions of the cuts 29g and 29h and the openings 29i and 29j. As shown, each cut 29g or 29h extends upward from a lower edge of the side wall 29a or 29b to a middle portion of the same. Due to the nature of the cuts 29g and 29h and provision of the openings 29i and 29j, the front portion of the longer link member 29 has a tendency to be bent downward upon receiving such big force.

As will be seen from Figs. 8 and 4, the front (or left) end of the longer link member 29 is pivotally connected to lower ends of two links 30 of which upper ends are pivotally connected to a shaft 14b fixed to a rear center part of the rectangular sliding frame 14 (see Fig. 3). As will be seen from Fig. 7, when the sliding frame 14 is brought to the inoperative (or stowed) position, the two links 30 become in parallel with the sliding frame 14.

As is seen from Fig. 8, the outwardly projected pins 29m of the longer link member 29 are pivotally held by the above-mentioned supporting bracket 31 fixed to the sliding frame 14. As is seen from Figs. 8 and 9, the nut member 27 is pivotally connected to the circular openings 29p of the longer link member 29 through respective spacers 29r.

It is now to be noted that, as is seen from Fig. 3, the drive mechanism 22, the first link mechanism 9 and the second link mechanism 28 constitute a so-called expanding mechanism for the Ottoman 10.

Referring to Fig. 10, there is shown a modification 29' of the longer link mechanism 29. In this modification, the radially swelled portions 29e and 29f are semi-cylindrical in shape and the elongate cuts 29g and 29h are triangular in shape. Due to similarity of this modification 29' to the longer link member 29, similar function to the longer link member 29 is possessed by the modification 29'.

As has been described hereinabove (see Fig. 3), the rectangular sliding frame 14, the spring wire frame 15, the base frame 16 and the trim member 18 constitute the entirety of the Ottoman 10. The spring wire frame 15 is used for providing the Ottoman with a suitable resiliency. The sliding frame 14 has plastic sliders 19A and 19B fixed to side edges thereof for smoothing movement in the guide grooves of the supporting frame 12.

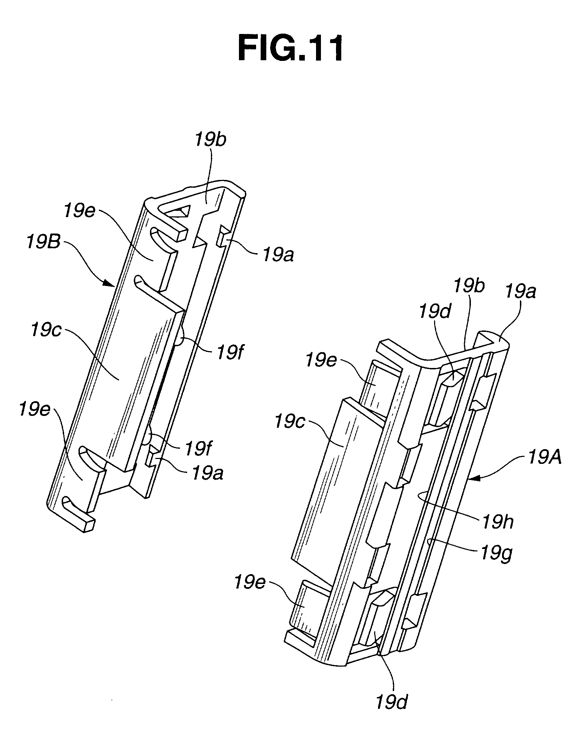

Referring to Figs. 11 to 19D, there is shown the detail of the Ottoman 10.

In Fig. 11, there is shown the detail of the plastic sliders 19A and 19B. As shown, each plastic slider 19A or 19B generally comprises a longer side wall 19b and a shorter front wall 19c which are united, and thus each plastic slider has a generally L-shaped cross section. Each slider 19A or 19B is formed with various engaging pawls 19a, 19d and 19e. Furthermore, each slider 19A or 19B is formed at the inner surface thereof with inwardly projected two boss portions 19f and at the outer surface thereof with two elongate recesses 19g and 19h.

As is seen from Fig. 12, upon assembly, the longer side wall 19b covers the corresponding side edge 14a of the sliding frame 14, and the engaging pawls 19a engage an open end of the sliding frame 14. The shorter front wall 19c mates with the front wall portion 14b of the sliding frame 14. The engaging paws 19d and 19e project obliquely. The two boss portions 19f are engaged with engaging openings 14c formed in the front wall portion 14b of the sliding frame 14. Due to provision of the two elongate recesses 19g and 19h, the sliding movement of the slider 19A or 19B relative to the guide frame 12b of the supporting frame 12 is smoothly made.

Figs. 13A to 13C show the steps for assembling each slider 19A or 19B to the corresponding side edge 14a of the sliding frame 14. That is, as is shown in Fig. 13A, at first, the engaging pawls 19 of the slider 19A or 19B is brought into engagement with the open end of the sliding frame 14. With this, the boss portions 19f are brought into contact with a rounded outer surface of the sliding frame 14, which is defined between side edge 14a and the front wall portion 14b. Then, keeping this condition, a certain external force is applied to the slider 19A or 19B to press the same toward the side edge 14a. With this, as is seen from Fig. 13B, the longer side wall 19b is flexed outward against its own resiliency, and when the pressing is further continued, as is seen from Fig. 13C, the boss portions 19f are finally brought into engagement with the engaging openings 14c of the front wall portion 14b of the sliding frame 14. With this, the slider 19A or 19B is tightly coupled with the sliding frame 14.

As is seen from Fig. 12, when the sliding frame 14 thus assembled is put into the guide grooves 12b and 12c of the reversed U-shaped supporting frame 12, the outwardly projected engaging pawls 19d and 19e are pressed against the inner surfaces of the guide grooves 12b and 12c thereby to suppress undesired play of the entirety of the sliding frame 14 relative to the supporting frame 12.

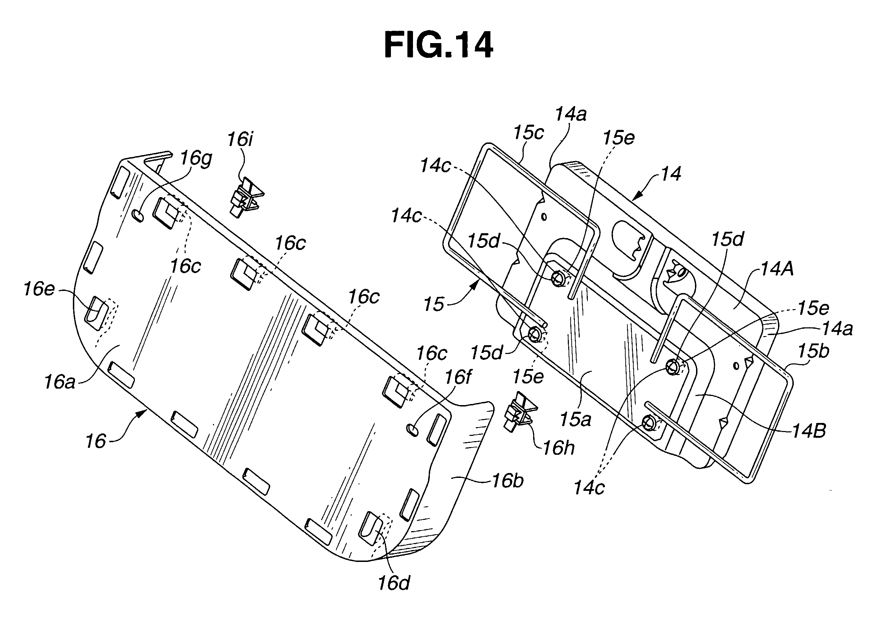

In Fig. 14, there is shown the detail of the sliding frame 14. As shown, the sliding frame 14 comprises a rectangular base portion 14A which has the side edges equipped with the above-mentioned sliders 19A and 19B, and a smaller rectangular portion 14B which is integrally formed on a front face of the base portion 14A. The smaller rectangular portion 14B is formed with four bolt holes 14C.

As is seen from Fig. 14, the wire frame 15 generally comprises a rectangular metal block 15a which is secured to the front face of the smaller rectangular portion 14B of the sliding frame 14, and a pair of rectangular wire structures 15b and 15c which are secured to the metal block 15a and extend radially outwardly as shown. For securing the metal block 15a to the smaller rectangular portion 14B, four bolts 15d are used, each passing through a bolt hole 15e of the metal block 15a and the above-mentioned bolt hole 14C of the smaller rectangular portion 14B. For adjusting relative positioning between the metal block 15a and the smaller rectangular portion 14B of the sliding frame 14, each bolt hole 15e is formed somewhat greater than the diameter of the bolt 15d. Each wire structure 15b or 15c is made of a steel wire and has both ends welded to the metal block 15a.

As is seen from Fig. 14, the base frame 16 is sized to cover the wire frame 15, and comprises a flat major portion 16a and a side wall portion 16b which extend along the side and lower edges of the major portion 16a. On a rear upper surface of the major portion 16a, there are formed four hooks 16c which catch J-hooks 18a (see Fig. 8) provided by the trim member 18. While on a rear lower surface of the major portion 16a, there are provided two rear hooks 16d and 16e which catch lower sections of the rectangular wire structures 15b and 15c respectively. Furthermore, the major portion 16a of the base frame 16 is formed at upper sides thereof with two small openings 16f and 16g by which respective plastic clips 16h and 16i are held. In assembly, the clips 16h and 16i hold upper sections of the rectangular wire structures 15b and 15c.

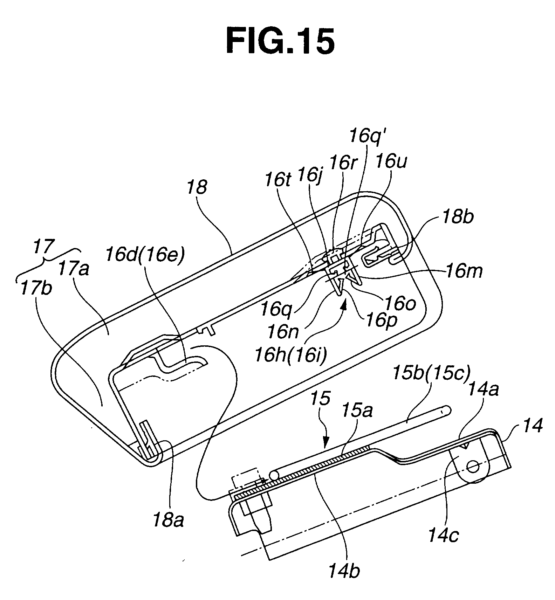

As is seen from Fig. 15, each clip 16h or 16i comprises a flat part 16j, front and rear side parts 16m and 16n which extend from front and rear ends of the flat part 16j, two bent back parts 160 and 16p which extend obliquely upward from lower ends of the front and rear side parts 16m and 16n, two wire holding parts 16q and 16q' which are arranged to face the bent back parts 16o and 16p, a triangular engaging part 16r which is formed on the flat part 16j and two resilient tongue parts 16t and 16u which extend obliquely outward from the flat part 16j.

As shown in the same drawing, the pad member 17 comprises a thicker pad proper 17a which is bonded to the flat major portion 16a of the base frame 16 (see Fig. 14) and a side wall portion 17b which extends along the side and lower edges of the pad proper 17a and is bonded to the side wall portion 16b of the base frame 16. The positional relation between the pad member 17 and the base frame 16 is clearly understood from Fig. 3.

As is seen from Figs. 8 and 3, the trim cover 18 is shaped and sized to cover the pad member 17. As shown in Fig. 8, at one end of the trim cover 18, there are provided a first group of J-hooks 18a which are engaged with the lower edge of the side wall portion 16b of the base frame 16, and at the other end of the trim cover 18, there are provided a second group of J-hooks 18b which are engaged with the hooks 16c of the base frame 16.

For assembling the Ottoman 10, the following steps are needed, which will be described with reference to Figs. 3, 14, 15 and 16A to 16D.

First, as is understood from Figs. 3 and 15, the pad member 17 is fixed to the base frame 16 by using a suitable adhesive, and then the trim member 18 is fixed to the pad member 17 having the J-hooks 18a and 18b respectively engaged with the side wall portion 16b of the base frame 16 and the hooks 16c of the same.

Then, as is seen from Fig. 14, the plastic clips 16h and 16i are fixed to the base frame 16 having the triangular engaging parts 16r mated with the two openings 16f and 16g of the base frame 16. Due to function of the resilient tongue parts 16t and 16u pressed against the lower surface of the flat major portion 16a of the major frame 16, the clips 16h and 16i can be tightly fitted to the base frame 16 without producing undesirable play.

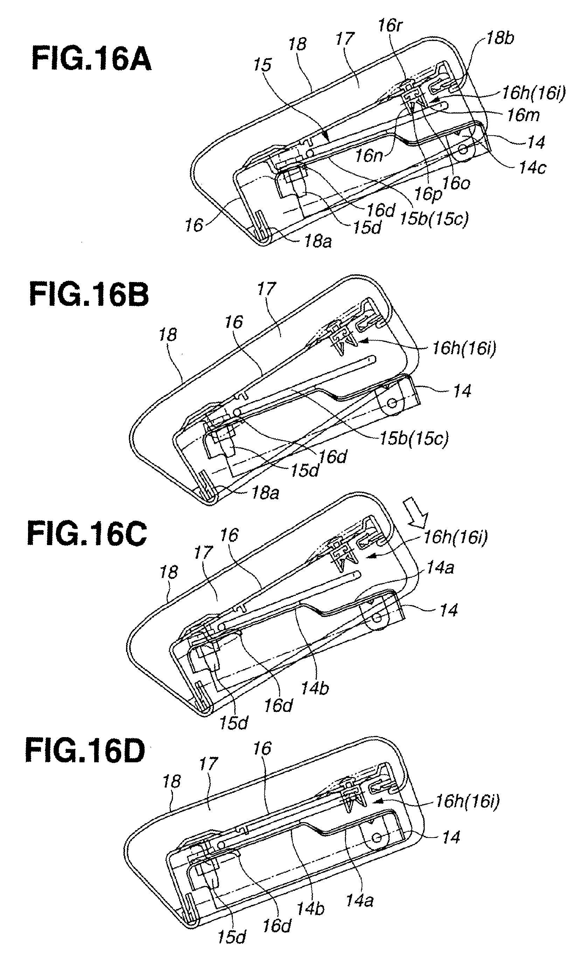

Then, as is seen from Figs. 16A and 14, the sliding frame 14 is attached to the rear surface of the base frame 16 in such a manner that the lower sections of the paired rectangular wire structures 15b and 15c thereof abut against the rear hooks 16d and 16e of the base frame 16.

Then, as is seen from Figs. 16B and 14, the sliding frame 14 is somewhat moved so as to induce a contact between the lower sections of the wire structures 15b and 15c and leading ends of the rear hooks 16d and 16e of the base frame 16 and then the unit of the base frame 16, pad member 17 and trim member 18 is pivoted in a counterclockwise direction in Fig. 16B so as separate the clips 16h and 16i from upper sections of the wire structures 15b and 15c.

With this, as is seen from Figs. 16C and 14, the lower sections of the wire structures 15b and 15c become engaged with the rear hooks 16d and 16e of the base frame 16 and the upper sections of the wire structures 15b and 15c assume a position to face the respective clips 16h and 16i. When the upper sections.of the wire structures 15b and 15c fails to assume a right position relative to the respective clips 16h and 16i, the four bolts 15d are loosen to adjust the positioning of the wire structures 15b and 15c relative to the sliding frame 14. Of course, after achieving the position adjusting, the bolts 15d are fastened.

Then, the unit of the base frame 16, pad member 17 and trim member 18 is pivoted in a clockwise direction in Fig. 16C about the mutually engaged portion between the lower sections of the wire structures 15b and 15c and the rear hooks 16d and 16e.

With this, as is seen from Fig. 16D, the upper sections of the wire structures 15b and 15c are gripped by the respective clips 16h and 16i. That is, the unit (16, 17 and 18) is properly coupled with the sliding frame 14 to constitute the Ottoman 10 (viz., footrest).

In the following, operation of the motor-driven footrest device 4 having the above-mentioned arrangement will be described with the aid of the drawings.

For ease of understanding, the description will be commenced with respect to an inoperative (or stowed) position of the Ottoman 10 as shown in Fig. 7.

Under this condition, the nut member 27 takes a deeper position relative to the threaded drive bolt 26 causing the Ottoman 10 to assume the stowed position wherein the Ottoman 10 is neatly received in the rectangular opening 2a formed in the front end portion of the seat cushion 2. That is, as has been described hereinabove, the distance between the pivoted portion of the front link 9A to the holding arm 8 and the pivoted portion of the rear link 9B to the holding arm 8 is determined larger than the distance between the pivoted portion of the front link 9A to the supporting arm 13 and the pivoted portion of the rear link 9B to the supporting arm 13. Under the stowed condition of the Ottoman 10, the front and rear links 9A and 9B of the first link . mechanism 9 come close to each other showing an inclination angle of about 30 degrees relative to a horizontal plane. That is, the first imaginary line passing through the pivoted portions of the front and rear links 9A and 9B to the corresponding holding arm 8 and a second imaginary line passing through the pivoted portions of the front and rear links 9A and 9B to the corresponding supporting arm 13 cross each other at an acute angle, so that the Ottoman 10 inclines by about 70 degrees relative to the horizontal plane as shown. Furthermore, under this stowed condition of the Ottoman 10, the sliding frame 14 is deeply received in the guide grooves 12b of the reversed U-shaped supporting frame 12, so that the supporting frame 12 is fully concealed by the Ottoman 10 and the upper end of the pad member 17 abuts against the lower surface of the seat cushion 2 leaving the lower end of the pad member 17 away from the vehicle floor.

When now the electric motor 23 is energized to turn in one direction due to manipulation of a control switch (not shown), the threaded drive bolt 26 is rotated in one direction. With this, the nut member 27 is moved forward along the threaded drive bolt 26 thereby moving the longer link member 29 forward. With this movement, as is seen from Fig. 8, the front and rear links 9A and 9B are forced to pivot in a counterclockwise direction causing the second imaginary line, which passes through the pivoted portions of the front and rear links 9A and 9B to the supporting arm 13, to approach a horizontal line. During this movement, the Ottoman 10 is moved forward while turning in a clockwise direction. Furthermore, during this movement, the angle between the longer link member 29 and the supporting bracket 31 gradually increases causing the links 30 to slide the Ottoman 10 forward in the guide grooves 12b of the supporting frame 12.

Finally, the Ottoman 10 is brought to the operative (viz., projected) position of Fig. 8. Upon this, the nut member 27 abuts against the front stopper 25B on the threaded drive bolt 26 and the electric motor 23 becomes deenergized.

When now the control switch is manipulated to turn the electric motor 23 to in the other direction, the Ottoman 10 is gradually brought to the inoperative (or stowed) position carrying out a reversed operation of the motor-driven footrest device 4. When the Ottoman 10 is brought to the inoperative position, the nut member 27 abuts against the rear stopper 25A on the threaded drive bolt 26 and at the same time the energization of the electric motor 23 is canceled.

In the following, safety movement of the motor-driven footrest device 4 expected when, due to a vehicle collision or the like, the footrest device 4 is applied with an abnormal big shock will be described with reference to Fig. 8.

For ease of understanding, the description will be made with respect to a case wherein the footrest device 4 of the invention is applied to a front passenger's seat.

When, with feet of a seat occupant being put on the Ottoman 10 in the operative (viz., projected) position, an associated motor vehicle encounters a head-on collision causing a dashboard of the vehicle to rush the Ottoman 10, the Ottoman 10 is violently pushed rightward applying the longer link member 29 with an abnormal big force through the links 30 and the supporting bracket 31. Upon this, the longer link member 29 is crushed at the outwardly swelled portions 29e and 29f permitting a certain rightward movement of the Ottoman 10 while absorbing the shock. For the above-mentioned reasons, the crushing of the longer link member 29 tends to induce a bending of the front portion of the member 29 in a downward direction, which permits an adequate shift of the Ottoman 10 for protecting the seat occupant's feet.

Of course, such desirable shock absorbing movement is expected even when the Ottoman 10 is in the inoperative (viz., stowed) position. That is, if the big force is transmitted from the dashboard to the folded Ottoman 10 through the seat occupant's feet, the force induces the shock absorbing crush of the longer link member 29. Due to this crush, the seat occupant's feet are permitted to move rightward by a certain distance, which protects his or her feet.

In the following, advantages of the present invention will be itemized.

The pivotal movement of the Ottoman 10 and the forward and rearward movement of the same are simultaneously carried out by actuating the first and second link mechanism 9 and 28 by the power of the electric motor 23. This arrangement brings about a simple construction of the motor-driven footrest device 4 of the invention.

In the inoperative (viz., stowed) position, the Ottoman 10 is neatly received in the rectangular opening 2a formed in the front end portion of the seat cushion 2. Thus, adequate foot space is provided before the seat cushion 2.

Due to the above-mentioned construction, the motor-driven footrest device 4 of the invention can be made into a module. Thus, the device 4 can be readily assembled before being fixed to the seat cushion 2.

Due to usage of the front and rear links 9A and 9B (two pairs), much complicated pivotal movement of the Ottoman 10 is obtained, which assures the movement of the Ottoman 10 between the inoperative and operative positions.

The longer link member 29 and its associated elements are constructed to absorb abnormally big force. Thus, the seat occupant's feet are safely protected even when, with his or her feed being put on the Ottoman 10, an associated motor vehicle encounters an head-on vehicle collision.

The entire contents of Japanese Patent Applications 2000-115016 (filed April 17, 2000), 2000-115019 (filed April 17, 2000), 2000-115020 (filed April 17, 2000) and 2000-115021 (filed April 17, 2000) are incorporated herein by reference.

Although the invention has been described above with reference to the embodiment of the invention, the invention is not limited to such embodiment as described above. Various modifications and variations of such embodiment may be carried out by those skilled in the art, in light of the above description.

## Claims

1. A motor-driven footrest device of a seat, comprising:
a footrest (10);
an expanding mechanism having one end equipped with said footrest, said expanding mechanism being movable to assume a shrunk condition (Fig. 7) wherein said footrest is received in an opening formed in a seat cushion of said seat and an expanded condition (Fig. 8) wherein said footrest is projected from said opening to permit the feet of a seat occupant to be put thereon;
an electric drive unit (22) connected to the other end of said expanding mechanism to move the same to assume said shrunk condition and said expanded condition by the force of an electric power; and
a mounting structure (60) secured to a base structure of said seat, said mounting structure carrying both of said expanding mechanism and said electric drive unit.

2. A motor-driven footrest device as claimed in Claim 1, in which said expanding mechanism comprises:
a first link mechanism (9) including a supporting frame (12) which is pivotally supported by said mounting structure (60) and has mutually opposed guide grooves (12b), said guide grooves slidably receiving therein side edges of said footrest (10); and
a second link mechanism (28) including a link member (29) which has one end pivotally connected to said footrest and the other end actuated by said electric drive unit (22); and
a power transmission mechanism (24, 26, 27) arranged between said electric drive unit and the other end of said second link mechanism to transmit a power of said electric drive unit to said second link mechanism;
whereby when said electric drive unit is energized, said link member (29) of the second link mechanism (28) is moved to pivot said footrest (10) together with said supporting frame (12) while inducing a sliding movement of said footrest in said guide grooves (12b) of said supporting frame.

3. A motor-driven footrest device as claimed in Claim 2, in which said first link mechanism further comprises:
two holding arms (8) secured to said mounting structure;
two supporting arms (13) secured to said supporting frame (12); and
two pivot units each being arranged between one of said holding arms (8) and the corresponding of said supporting arms (13) thereby to induce a pivotal movement of said supporting frame relative to holding arms (8).

4. A motor-driven footrest device as claimed in Claim 3, in which each of said pivot units comprises:
front and rear links (9A, 9B), each having one end pivotally connected to the corresponding holding arm (8) and the other end pivotally connected to the corresponding supporting arm (13),
wherein the distance between the pivoted portions of said front and rear links to said holding arm (8) is greater than the distance between the pivoted portions of said front and rear links to said supporting arm (13).

5. A motor-driven footrest device as claimed in Claim 2, in which said second link mechanism (28) further comprises:
a supporting bracket (31) secured to said supporting frame (12), said supporting bracket (31) being pivotally connected to said link member (29).

6. A motor-driven footrest device as claimed in Claim 5, in which said power transmission mechanism comprises:
a speed reduction gear (24) driven by said electric drive unit 23);
a threaded drive shaft (26) driven by said speed reduction gear (24); and
a nut member (27) operatively engaged with said threaded drive shaft, said nut member being pivotally connected to the other end of said link member (29).

7. A motor-driven footrest device as claimed in Claim 6, in which said second link mechanism (28) further comprises an elongate case (21) which is secured to said mounting structure (60) to cover said threaded drive shaft (26).

8. A motor-driven footrest device as claimed in Claim 1, in which said footrest comprises:
a rectangular sliding frame (14);
a metal block (15a) secured to said sliding frame;
a spring wire structure (15) secured to said metal block;
a base frame (16) detachably coupled with said sliding frame having said spring wire structure interposed therebetween;
a pad member (17) covering said base frame; and
a trim member (18) covering said pad member,
wherein said spring wire structure (15) is arranged to cause said base frame to have a resiliency relative to said sliding frame.

9. A motor-driven footrest device as claimed in Claim 8, in which said spring wire structure (15) comprises a pair of rectangular spring wire structures (15b, 15c) which are secured to the metal block (15a) and extend radially outward from the metal block.

10. A motor-driven footrest device as claimed in Claim 9, in which said base frame (16) is equipped with hooks which catch lower sections of said rectangular wire structures.

11. A motor-driven footrest device as claimed in Claim 10, further comprising clips (16h, 16i) held by openings formed in said base frame (16), said clips catching upper sections of said rectangular wire structures.

12. A motor-driven footrest device as claimed in Claim 11, in which said footrest further comprises sliders (19A, 19B) which are connected to side edges of said rectangular sliding frame (14) to smooth a sliding movement of said sliding frame relative to guide grooves (12b) defined by a supporting frame (12), said supporting frame being an element of said expanding mechanism.

13. A motor-driven footrest device as claimed in Claim 12, in which each of the sliders is constructed of a plastic and comprises:
a longer side wall (19b);
a shorter front wall (19c) integrally connected to said longer side wall to form a unit having a generally L-shaped cross section; and
a plurality of engaging pawls (19a) integrally formed on said unit, said engaging pawls being detachably engaged with said rectangular sliding frame (14).

14. A motor-driven footrest device as claimed in Claim 2, in which said link member (29) is formed with an expanded portion to serve as a shock absorber.

15. A motor-driven footrest device as claimed in Claim 14, in which said link member comprises:
two parallel side walls having outwardly swelled portions (29e, 29f) at one end portions thereof; and
two connecting walls each extending between said two parallel side walls.

16. A motor-driven footrest device as claimed in Claim 15, in which each of said swelled portions of said parallel side walls is shaped to have a trapezoidal cross section.

17. A motor-driven footrest device as claimed in Claim 15, in which each of said swelled portions of said parallel side walls of said link member is shaped to have a semi-cylindrical cross section.

18. A motor-driven footrest device as claimed in Claim 15, in which the two parallel side walls of said link member are formed with respective cuts (29g) with which the mechanical strength of the parallel side walls around said cuts is lowered.

19. A motor-driven footrest device for use with a sliding seat, comprising:
a footrest (10);
an expanding mechanism having one end equipped with said footrest, said expanding mechanism being movable to assume a shrunk condition (Fig. 7) where said footrest is received in an opening formed in a seat cushion of said seat and an expanded condition (Fig. 8) wherein said footrest is projected from said opening to permit a seat occupant's feet to put thereon;
an electric drive unit (22) connected to the other end of said expanding mechanism to move the same to assume said shrunk condition and said expanded condition by the force of an electric power;
a seat slide mechanism (6) for sliding the seat, said seat slide mechanism including two fixed rails (6a, 6b) secured to a fixed structure, and two slide rails slidably engaged with said fixed rails and mounting thereon the seat; and
a mounting structure (6o) secured to said two slide rails to move therewith, said mounting structure carrying both of said expanding mechanism and said electric drive unit.

20. A motor-driven footrest device as claimed in Claim 19, in which said expanding mechanism comprises:
a first link mechanism (9) including a supporting frame (12) which is pivotally supported by said mounting structure (60) and having mutually opposed guide grooves (12b), said guide grooves slidably receiving therein side edges of said footrest; and
a second link mechanism (28) including a link member (29) which has one end pivotally connected to said footrest and the other end actuated by said electric drive unit (22), said link member having an breakable portion to serve as a shock absorbing member; and
a power transmission mechanism (24, 26, 27) arranged between said electric drive unit and the other end of said second link mechanism to transmit a power of said electric drive unit to said second link mechanism,
whereby when said electric drive unit is energized, said link member (29) of the second link mechanism (28) is forced to move to pivot said footrest together with said supporting frame (12) while inducing a sliding movement of the side edges of said footrest in said guide grooves (12b) of said supporting frame.

21. A motor-driven footrest device as claimed in Claim 19, in which said seat slide mechanism (6) further comprises an electric motor (6e) for moving the slide rails relative to the fixed rails by the force of an electric power.
